# EUROPÄISCHE PATENTSCHRIFT

(11) **EP 0 721 617 B1**
(45) Veröffentlichungstag und Bekanntmachung des Hinweises auf die Patenterteilung: **28.05.1997**
(21) Anmeldenummer: 94926099.6
(22) Anmeldetag: 14.09.1994
(51) Int. Cl.: G06F 7/00

(54) **ANORDNUNG ZUR REGELDEKODIERUNG UND REGELAUSWERTUNG FÜR EINEN FUZZY-INTERFERENCE-PROZESSOR MIT HOHER AUFLÖSUNG**
ARRANGEMENT FOR RULE DECODING AND EVALUATION FOR A HIGH-RESOLUTION FUZZY INFERENCE PROCESSOR
SYSTEME DE DECODAGE ET D'EVALUATION DE REGLES POUR UN PROCESSEUR D'INFERENCE FLOUE A HAUTE RESOLUTION

(30) Priorität: 20.09.1993 DE 4331897
(43) Veröffentlichungstag der Anmeldung: 17.07.1996
(73) Patentinhaber: SIEMENS AKTIENGESELLSCHAFT, 80333 München (DE)
(72) Erfinder: KÜNEMUND, Thomas, Dr., D-80337 München (DE); HENTSCHEL, Klaus, D-84028 Landshut (DE)
(86) Internationale Anmeldenummer: DE9401061
(87) Internationale Veröffentlichungsnummer: WO9508797

(56) Entgegenhaltungen:
- EP-A- 0 513 829
- IEEE INTERNATIONAL CONFERENCE ON FUZZY SYSTEMS, 8-12 MARCH 1992, SAN DIEGO, CA., USA, 1992, IEEE, NEW YORK, NY, USA. Seiten 1317 - 1323, XP000343007 H. EICHFELD 'Architecture for a CMOS Fuzzy Logic Controller with optimized memory organisation and operator design'
- IEEE INTERNATIONAL CONFERENCE ON FUZZY SYSTEMS, 8-12 MARCH 1992, SAN DIEGO, CA., USA, 1992, IEEE, NEW YORK, NY, USA. Seiten 537 - 544, XP000342918 H. IKEDA ET AL. 'A Fuzzy Inference Coprocessor Using a Flexible Active-Rule-Driven Architecture'

## Beschreibung

Anordnung zur Regeldekodierung und Regelauswertung für einen Fuzzy-Inference-Prozessor mit hoher Auflösung.

Bei Fuzzy-Inference-Prozessoren mit einer Auflösung von beispielsweise 8 Bit lassen sich Werte für die Zugehörigkeitsfunktionen der Eingangsvariablen noch problemlos in einem Speicher ablegen. Bei einer Auflösung der Eingangsvariablen von mehr als 8 Bit, zum Beispiel für 10 - 16 Bit, müssen die Werte der Zugehörigkeitsfunktionen der Eingangsvariablen aus Speicherplatzgründen aus wenigen Eckdaten in der Fuzzifikationsschaltung berechnet werden. Ist wegen der zu minimierenden Chipfläche nur eine einzige Fuzzifikationsschaltung im Fuzzy-Inference-Prozessor vorhanden, so müssen dort alle Eingangsvariablen zeitlich nacheinander berechnet werden.

Die der Erfindung zugrundeliegende Aufgabe besteht nun darin, eine Anordnung zur Regeldekodierung und Regelauswertung anzugeben, die für einen hinsichtlich der Verarbeitungsgeschwindigkeit und der Chipfläche optimalen Fuzzy-Inference-Prozessor geeignet ist, der Eingangsvariable zeitlich nacheinander verarbeitet und bei dem eine Regeldekodierung und Regelauswertung weitgehend parallel zur Fuzzifikation durchführbar ist.

Diese Aufgabe wird erfindungsgemäß durch die im Patentanspruch 1 angegebenen Merkmale gelöst.

Die vom Patentanspruch 1 abhängigen Patentansprüche 2 bis 5 betreffen vorteilhafte Ausgestaltungen der Erfindung, wobei eine Ausgestaltung nach den Merkmalen des Patentanspruchs 5 zusätzlich eine zur Regeldekodierung und Regelauswertung teilweise zeitlich parallel ablaufende Defuzzifikation bedeutet.

Die Erfindung wird anhand von Zeichnungen näher erläutert. Dabei zeigt:
- Figur 1: ein Blockschaltbild zur Verdeutlichung des Zusammenwirkens der erfindungsgemäßen Anordnung mit weiteren wesentlichen Bestandteilen eines Fuzzy-Inference-Prozessors,
- Figur 2: eine Darstellung zur Erläuterung der Speicherorganisation,
- Figur 3: eine Detailschaltung eines Regeldekoders der erfindungsgemaßen Anordnung,
- Figur 4: eine Detailschaltung einer Einheit zur Bildung von Auswahlsignalen der erfindungsgemäßen Anordnung,
- Figur 5: eine Detailschaltung eines ersten Teils einer Regelauswerteschaltung der erfindungsgemäßen Anordnung und
- Figur 6: einen zweiten Teil der Regelauswertungseinheit der erfindungsgemäßen Anordnung.

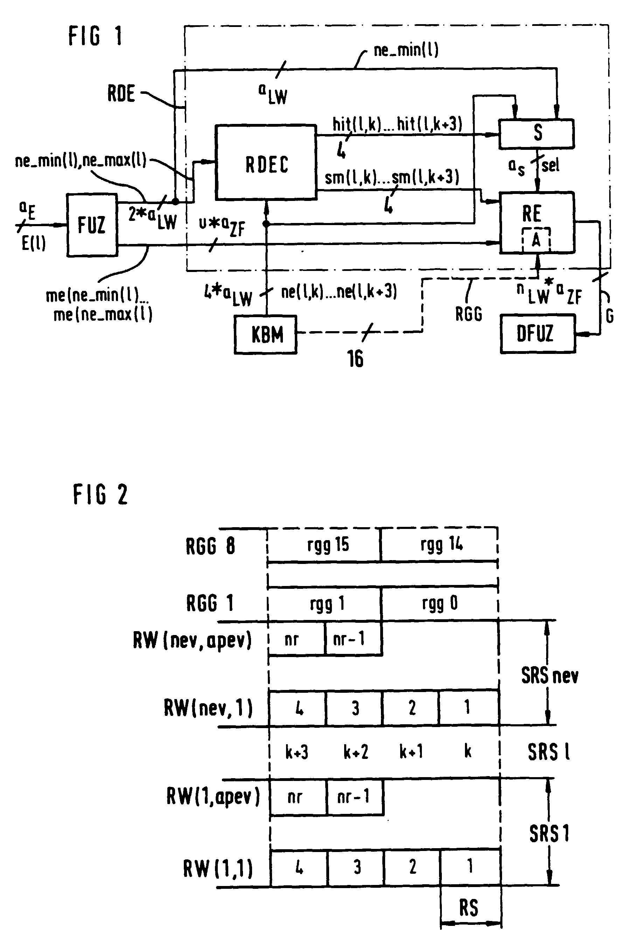

In Figur 1 sind, neben der erfindungsgemäßen Anordnung (RDE) zur Regeldekodierung und Regelauswertung, eine Fuzzifikationseinrichtung FUZ, ein Wissensbasisspeicher KBM und eine Defuzzifikationseinrichtung DFUZ dargestellt. Die erfindungsgemäße Anordnung RDE besteht dabei aus einem Regeldekodierer RDEC, einer Einheit S zur Bildung von Auswahlsignalen sel und einer Regelauswertungseinheit RE. Die Regelauswertungseinheit RE enthält dabei eine gestrichelt dargestellte optional vorgesehene Einrichtung A zur Erzeugung von Nummern für linguistische Werte der Ausgangsvariablen.

Der Fuzzifikationseinrichtung FUZ werden aus scharfen Eingangswerten E (l) der jeweiligen Eingangsvariablen 1 eine minimale Nummer ne_min (l) eines getroffenen linguistischen Wertes der jeweiligen Eingangsavariablen und eine maximale Nummer (ne_max (l)) sowie Werte (me (ne_min (l)) ... me (ne_max (l)) von Zugehörigkeitsfunktionen von linguistischen Werten, deren Nummern im abgeschlossenen Intervall zwischen der minimalen und maximalen Nummer liegen, gebildet. Ist der maximal zulässige Überlappungsgrad u größer als 2, so werden nicht nur die Nummern ne_min (l), und ne_max (l), sondern maximal u Nummern im Bereich zwischen diesen beiden Nummern gebildet. Die Fuzzifizierungszeit hängt von u ab und ist im allgemeinen unterschiedlich lang für verschiedene Eingangsvariable. Die Nummer ne_min (l) wird sowohl dem Regeldekodierer DREC als auch der Einheit S zugeführt. Die Nummer ne_max (l) wird hingegen nur dem Regeldekodierer RDEC zugeführt. Die beiden Nummern ne_min (l) und ne_max (l) weisen eine Auflösung von a_{LW} Bits auf.

Der Regeldekodierer DREC erhält zusätzlich zu den Nummern aus der Fuzzifikationseinrichnung Nummern ne (l, k) ... ne (l, k + 3) für in einer jeweiligen Mehrzahl von Regeln (k, ... k + 3) vorgegebene linguistische Werte der jeweiligen Einganzsvariablen l aus dem Wissensbasisspeicher KBM. Wesentlich ist hierbei, daß mehrere, hier vier, Regeln gleichzeitig verarbeitet werden. Die Nummern aus dem Wissensbasisspeicher besitzen jeweils ebenfalls eine Auflösung von a_{LW} Bits. Im Regeldekoder werden für eine jeweilige eingangsvariable E (l) und aus einer jeweiligen Mehrzahl von Regeln, beispielsweise aus vier Regeln, Treffersignale hit (l, k) ... hit (l, k + 3) gebildet und der Einheit S zugeführt. Die Treffersignale hit (l, k) ... hit (l , k + 3) sind jeweils ein Bit breit und dienen zur Feststellung ob und wenn ja welche der Regeln k ... k+ 3 hinsichtlich der Eingangsvariablen l erfüllt sind. Ferner werden im Regeldekodierer RDEC für die jeweilige Eingangsvariable l und die jeweilige Mehrzahl von Regeln k, ... k+3 Signale sm (l, k) ... sm (l, k + 3) gebildet und der Auswertungseinrichtung RE zugeführt. Die Signale sm (l, k) .. sm (l, k + 3) sind jeweils ein Bit breit und dienen zur Maskierung einer in einer Regel nicht vorkommenden Eingangsvariablen.

Zusätzlich zur Nummer ne_min (l) aus der Fuzzifikationseinrichtung FUZ werden der Einheit S auch die Nummern ne (l, k) ... ne (l, k + 3) zugeführt und in ihr Auswahlsignale sel mit einer Gesamtauflösung aₛ gebildet.

Die Regelauswertungseinheit RE erhält zusätzlich zu den Signalen sm (l, k) ... sm (l, k + 3) u Werte me (ne_min (l)) ... me (ne_max (l)), woraus in ihr aggregierte Gewichtungsfaktoren G in Abhängigkeit der Auswahlsignale sel für eine nachgeschaltete Defuzzifikationseinheit DFUZ gebildet werden. Dabei wird für jeden der n_{LW} linguistischen Werte der Ausgangsvariablen ein aggregierter Gewichtungsfaktor der Auflösung a_{ZF} gebildet. Die Gesamtwortbreite der Gewichtungsfaktoren G beträgt somit n_{LW}* a_{ZF}.

Die optional vorgesehene Einrichtung A in der Regelauswertungseinheit RE wird von dem Wissensbasisspeicher KBM mit beispielsweise 16 Bit breiten Regelgruppengrößenwörtern RGG versorgt.

Anhand von Figur 2 wird die erforderliche Speicherorganisation des Wissensbasisspeichers KBM deutlich. Dabei besteht ein Regelsegment RS aus einer Nummer für einen in einer Regel für eine bestimmte Eingangsvariable vorgegebenen linguistischen Wert. Werden beispielsweise wie hier vier Regeln gleichzeitig verarbeitet, so ist es von Vorteil, wenn ein Regelsegmentwort aus der entsprechenden Anzahl von Regelsegmenten besteht, da hierbei eine besonders einfache Adressierung im Wissensbasisspeicher möglich ist. Das niedrigstwertige Segment ist beispielsweise der Regel k und das höchstwertige Regelsegment ist beispielsweise der Regel k + 3 zugeordnet. Für jede Eingangsvariable l wird ein eigener Satz von Regelsegmentworten SRSl vorgesehen, der jeweils aus einer ausreichenden Zahl von Regelsegmentworten RW(l,1) ... RW(l, apev) besteht um die Nummern für die linguistischen Werte aller nr-Regeln hinsichtlich der jeweiligen Eingangsvariablen 1 abzuspeichern. Für nev Eingangsvariablen sind also der Reihe nach im Speicher Sätze von Regelsegmentworten SRS1 ... SRSl ... SRSnev vorgesehen, wobei beispielsweise das Regelsegmentwort RW(1,1) des Satzes von Regelsegmentworten SRS1 durch die niedrigste Adresse und das Regelsegmentwort RW(nev, apev) des Satzes von Regelsegmentworten RS-nev durch die höchste Adresse im Wissensbasisspeicher KBM adressiert ist. Oberhalb der zuletzt genannten Adresse kann sich beispielsweise ein weiterer Satz von Regelsegmentworten befinden, der in entsprechender Weise die Nummern für die linguistischen Werte der Ausgangsvariablen beinhaltet. In Figur 2 ist gestrichelt ein Speicherbereich für Regelgruppengrößenworte RGG1 ... RGG8 angedeutet, wobei ein Regelgruppengrößenwort hier jeweils aus zwei Regelgruppengrößen besteht. Das Regelgruppengrößenwort RGG1 besitzt beispielsweise 16 Bit, wobei das niedrigwertige Byte der Regelgruppengröße rgg0 und das hochwertige Byte der Regelgruppengröße rggl zugeordnet ist. In entsprechender Weise sind alle Regelgruppengrößenworte bis zum Regelgruppengrößenwort RGG8 mit den Regelgruppengrößen rggl5 und rggl4 organisiert. Eine Regelgruppe umfaßt jeweils alle Regeln, die im Folgeteil der jeweiligen Regel den gleichen linguistischen Wert der Ausgangsvariablen aufweisen. Eine nullte Regelgruppe beinhaltet somit beispielsweise alle rgg0 Regeln, die im Folgeteil den nullten linguistischen Wert der Ausgangsvariablen aufweisen. Um eine Verarbeitung nach Regelgruppen zu ermöglichen, müssen selbstverständlich alle Regeln selbst nach den Nummern für die linguistischen Werte der Ausgangsvariablen gruppiert werden.

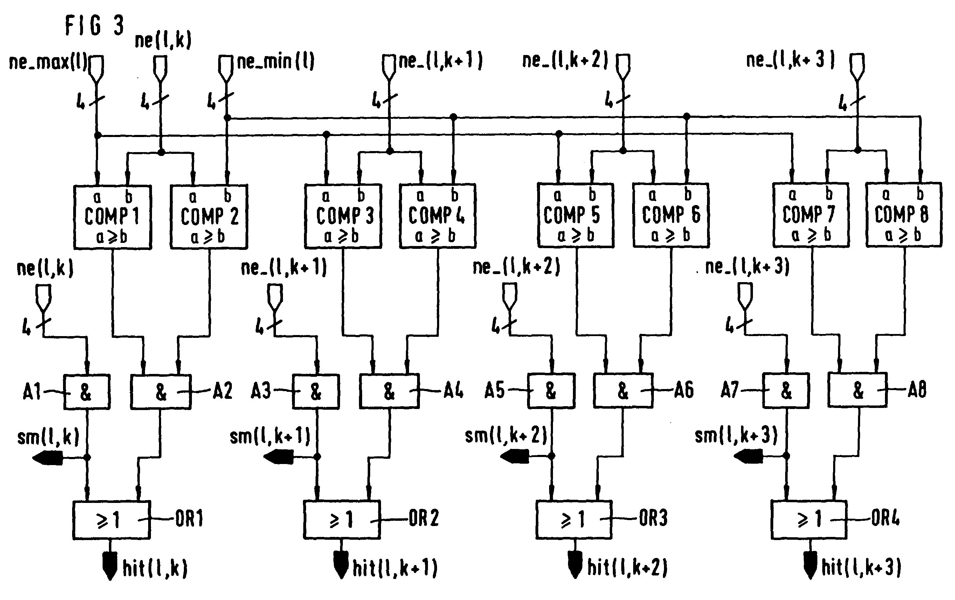

In Figur 3 ist eine vorteilhafte Ausgestaltung des Regeldekodierers RDEC dargestellt, wobei hier beispielhaft vier Regeln k ... k + 3 gleichzeitig dekodierbar sind. Der Regeldekodierer weist pro Regel zwei Größer-Gleich-Komparatoren, zum Beispiel COMP1 und COMP2, zwei UND-Gatter, zum Beispiel Al und A2, und ein ODER-Gatter, zum Beispiel OR1, auf. Für die gleichzeitige Dekodierung von vier Regeln sind also insgesamt acht Komparatoren COMP1 ... COMP8, acht UND-Gatter A1 ... A8 und vier ODER-Gatter OR1 ... OR4 vorgesehen. Die Komparatoren COMP1 ... COMP8 besitzen jeweils die Vergleichsbedingung a größer gleich b. Beim Dekodiererteil für die Regel k wird die Nummer ne (l, k) für einen in der Regel k vorgegebenen linguistischen Wert der Eingangsvariable 1 einem b-Eingang des Komparators COMP1 und einem a-Eingang des Komparators COMP2 zugeführt. Die Nummern ne (l, k + 1) ... ne (l, k + 3) werden in entsprechender Weise den Komparatoren COMP3 ... COMP8 zugeführt. Die a-Eingange der Komparatoren COMP1, COMP3, COMP5 und COMP7 erhalten jeweils die maximale Nummer ne_max (l) der getroffenen linguistischen Werte der Eingangsvariablen l. Die b-Eingänge der Komparatoren COMP2, COMP4, COMP6 und COMP8 erhalten die minimale Nummer ne_min (l) der getroffenen linguistischen Werte der Eingangsvariablen l. Die Ausgangssignale der Komparatoren COMP1 und COMP2 werden durch das UND-Gatter A2, die Ausgangssignale der Komparatoren COMP3 und COMP4 werden durch das UND-Gatter A4, die Ausgangssignale der Komparatoren COMP5 und COMP6 durch das UND-Gatter A6 sowie die Ausgangssignale der Komparatoren COMP7 und COMP8 durch das UND-Gatter A8 verknüpft. Die Nummer ne (l, k) für den in der Regel k vorgegebenen linguistischen Wert der Eingangsvariablen 1 wird bitweise durch das UND-Gatter Al zum Signal sm (l, k) zur Maskierung einer in einer Regel nicht vorkommenden Eingangsvariablen verknüpft. Die Ausgangssignale der UND-Gatter A1 und A2 werden durch das ODER-Gatter OR1 zu einem Treffersignal hit (l, k) verknüpft. Für die Regeln k + 1 ... k + 3 sind entsprechende Verknüpfungen vorgesehen, wobei die Signale sm (l, k + 1) ... sm (l, k + 3) und die Treffersignale hit (l, k + 1) ... hit (l, k + 3) gebildet werden.

Durch die UND-Schaltungen A1, A3, A5 und A7 wird geprüft, ob für die Nummern ne (l, k) ... ne (, k + 3) eine Kodierung 1111 vorliegt, die darauf hinweist, daß die Eingangsvariable 1 in den jeweiligen Regeln nicht vorkommt. Das Ausgangssignal der UND-Schaltung A2, A4, A6 und A8 zeigt jeweils an, ob die Nummern ne (l, k) der in den Regeln k ... k + 3 vorgegebenen linguistischen Werte der Eingangsvariablen l im abgeschlossenen Intervall zwischen der minimalen Nummer ne_min (l) und der maximalen Nummer ne_max (l) getroffener linguistischer Werte der Eingangsvariablen l liegt oder nicht, wobei der Bereich die Werte ne_min (l) und ne_max (l) beinhaltet. Da Zwischenwerte zwischen diesen Bereichsgrenzen ne_min (l) und ne_max (l) möglich sind, kann der maximal mögliche Überlappungsgrad u nicht nur den Wert 2, sondern auch höhere Werte annehmen. Durch die ODER-Verknüfpung der Ausgangssignale der UND-Gatter wird also ein Treffersignal, beispielsweise hit (l, k), erzeugt, wenn beispielsweise die Nummer ne (l, k) in dem oben angegebenen Bereich liegt oder wenn die Eingangsvariable in der Regel k nicht vorkommt.

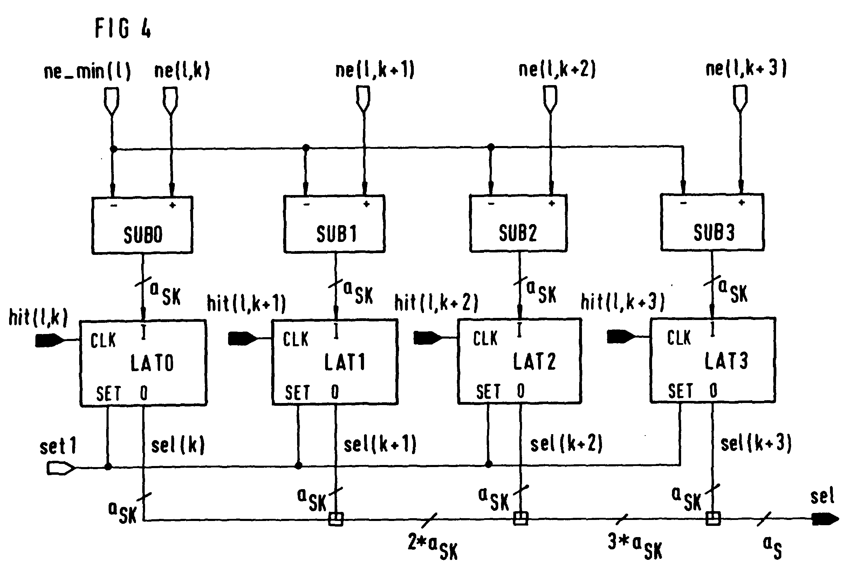

In Figur 4 wird eine vorteilhafte Ausgestaltung der Einheit S zur Bildung von Auswahlsignalen sel dargestellt, bei der für jede Regel aus der Mehrzahl von Regeln k ... k + 3 jeweils ein Substrahierer und ein nachgeschaltetes Halteglied vorgesehen sind. Die in Figur 4 dargstellte Einheit S weist also vier Subtrahierer SUB0 ... SUB3 und vier Halteglieder LAT0 ... LAT3 auf. Den Subtrahierern SUB0 ... SUB3 wird als Subtrahend die minimale Nummer ne_min (l) zugeführt. Der Subtrahierer SUB0 erhält die Nummer ne (l, k), der Subtrahierer SUB1 die ne (l, k + 1), der Subtrahierer SUB2 die Nummer ne (l, k + 2) und der Subtrahierer SUB3 die Nummer ne (l, k + 3 ) als Minuend. Da die Nummer ne (l, k) Werte von ne_min (l) bis ne_max (l) annehmen kann, sofern die Eingangsvariable l in den jeweiligen Regeln vorkommt, ergibt sich am Ausgang der Subtrahierer ein Wertebereich von 0 bis u - 1 die einer Auflösung von Int (ld (u)) entsprechen würde, wobei Int(x) die kleinste natürliche Zahl ≥ x bedeutet. Da für den Fall, daß die Eingangsvariable l in der jeweiligen Regel nicht vorkommt ebenfalls ein Bit erforderlich ist, beträgt die erforderliche Auflösung a_{SK} gleich Int (ld (u)) + 1. Für einen maximalen Überlappungsgrad von u = 4 wird also nur eine Ausgangsauflösung aₛₖ gleich 3 benötigt und es brauchen jeweils nur die drei niedrigstwertigen Bits berücksichtigt werden. Die Treffersignale hit (l, k) ... hit (l, k + 3) dienen als Taktsignale für die Halteglieder LAT0 ... LAT3, die, nach Erhalt eines jeweiligen Taktsignals, ein jeweiliges Ausgangssignal sel (k) ... sel (k + 3) der Ausgangssignale der Subtrahierer SUB0 ... SUB3 erhalten, wobei die Auswahlsignale SEL eine Gesamtauflösung a_{S} von 4 * a_{SK} aufweisen. Die Halteglieder LAT0 ... LAT3 sind durch ein Setzsignal SET auf 1 ... 1 setzbar.

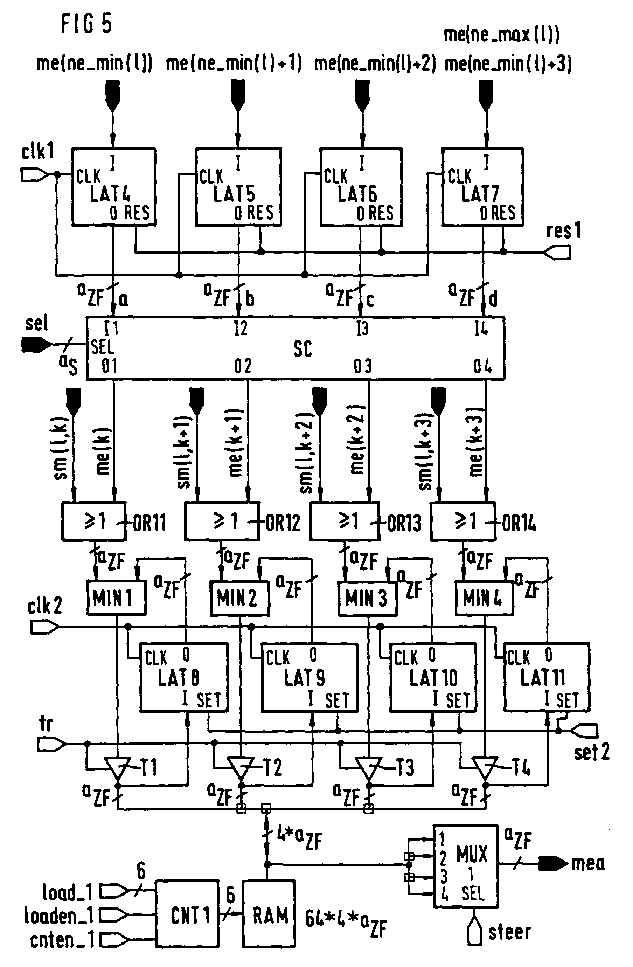

In Figur 5 ist eine bevorzugte Ausgestaltung eines ersten Teils der Regelauswertungeinheit RE dargestellt. Da der maximal mögliche Überlappungsgrad hier beispielsweise u = 4 beträgt, sind vier Halteglieder LAT4 ... LAT7 zur Zwischenspeicherung der Werte me (ne_min (l)) ... me (ne_min (l) + 3) vorgesehen, wobei der Wert me (ne_min (l) + 3) gleichzeitig den Wert me (ne_max (l)) darstellen kann. Die Halteglieder LAT4 ... LAT7 sind durch ein gemeinsames Taktsignal CLK1 taktbar und durch ein gemeinsames Rücksetzsignal RES1 rücksetzbar. Die Ausgänge der Halteglieder LAT4 ... LAT7 sind mit Eingängen I1 ... I4 einer Zuordnungseinheit SC verbunden und besitzen die Auflösung a_{ZF}. Die Zuordnungseinheit SC ordnet nun in Abhängigkeit der Auswahlsignale sel die Signale an den Eingängen I1 ... I4 bzw. eine logische Null den Ausgängen O1 ... O4 der Zuordnungseinheit SC zu. Am Ausgang O1 liegt dann der Wert me (k) der zugehörigkeitsfunktion des durch die Regel k für die Eingangsvariable l vorgegebenen linguistischen Wertes an. Am Ausgang O2 liegt entsprechend der Wert me (k + 1), am Ausgang O3 der Wert me (k + 2) und am Ausgang O4 der Wert me (k + 3) an. Die Zuordnungseinheit SC besteht aus vier gleichartig aufgebauten Einheiten, wobei beispielsweise der Wert me (k) den Wert am Eingang I1 erhält sofern das Auswahlsignal sel (k ) gleich 000 beträgt, der Wert me (k) den Wert des Eingangs I2 erhält, sofern das Auswahlsignal sel (k) gleich 001 beträgt, der Wert me (k) den Wert des Eingangs I3 erhält, sofern das Auswahlsignal sel (k) gleich 010 beträgt, der Wert me (k) den Wert am Eingang I4 erhält, sofern das Auswahlsignal sel (k) 011 beträgt und der Wert me (k) gleich 0 gesetzt wird, sofern das höchstwertige Bit des Auswahlsignals sel (k) gleich 1 beträgt, also die Eingangsvariable 1 in der Regel k nicht auftritt. Die Bildung der Werte me (k + 1) ... me (k + 3) erfolgt entsprechend wie beim Wert me (k). In einem ODER-Gatter ORll wird nun der Wert me (k) mit dem Signal sm (1, k), in einem ODER-Gatter OR12 der Wert me (k + 1) mit dem Signal sm (1, k + 1 ), in einem ODER-Gatter OR13 der Wert me (k + 2) mit dem Signal sm (l, k + 2) und in einem ODER-Gatter OR14 der Wert me (k + 3) mit dem Signal sm (l, k + 3) bitweise ODER-verknüpft, wodurch am Ausgang der ODER-Gatter hinsichtlich einer nachfolgenden Minimumbildung neutrale maximale Worte 11 ... 1 anliegen, sofern durch ein jeweiliges Signal, beispielsweise sm (l, k) gleich 1 festgelegt wird, daß die Eingangsvariable 1 in der Regel k nicht vorkommt. Entsprechendes gilt für die gleichzeitig verarbeiteten Regeln k + 1 ... k + 3. Der Ausgang des ODER-Gatters ORll wird einem ersten Eingang einer Minimumschaltung MIN1 zugeführt deren Ausgangssignal über einen Treiber T1 in einen Schreib/Lese-Speicher RAM einschreibbar und von diesem in ein Halteglied LAT8 auslesbar ist, wobei der Ausgang des Halteglieds LAT8 mit dem zweiten Eingang der Minimumschaltung MIN1 verbunden ist. Entsprechend sind weitere Minimumschaltungen MIN2 ... MIN4, Halteglieder LAT9 ... LAT11 und Treiber T2 ... T4 beschaltet. Die Halteglieder LAT8 ... LAT11 sind durch ein Signal CLK2 gemeinsam taktbar und durch ein Setzsignal SET2 gemeinsam setzbar. Die Treiber T1 ... T4 sind durch ein gemeinsames Treiberaktivierungssignal tr gleichzeitig aktivierbar.

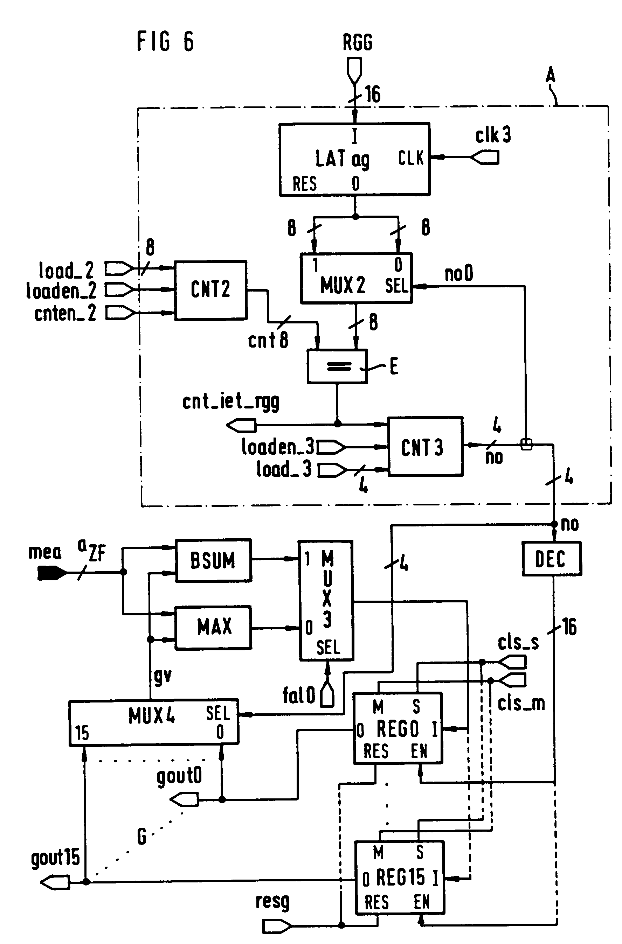

Für den Fall, daß ein Regelsatz aus 256 Regeln besteht, jeweils vier Regeln parallel verarbeitbar sind und die Auflösung der Zugehorigkeitsfunktionen gleich a_{ZF} Bit beträgt, so ist ein Schreib/Lese-Speicher RAM mit 64 Worten zu je 4 * a_{ZF} Bit erforderlich. Die 64 Worte sind durch einen Zähler CNT1 mit 6 Bit adressierbar, wobei dem Zähler CNT1 ein Zähleraktivierungssignal cnten_1, ein Ladeaktivierungssignal loaden_1 und ein Ladesignal load_1 zuführbar sind. Aus den an den Ausgängen der Treiber T1 ... T4 anliegenden Signale ist mit Hilfe eines Multiplexers MUX1, der in diesem Fall in einem Eins-aus-Vier-Multiplexer besteht, in Abhängigkeit eines Auswahlsignals STEER ein Wert mea in Form eines aktuellen Gewichtungsfaktors auswählbar und dem, in Figur 6 dargestellten zweiten Teil der Regelauswertungseinheit zuführbar. Aus dem Schreib/Lese-Speicher RAM wird jeweils für vier Regeln das bisherige Minimum für die Eingangsvariablen 0 ... l - 1 in die Halteglieder LAT8 ... LAT11 ausgelesen und in den Minimumschaltungen MIN1 ... MIN4 mit den Werten für die aktuelle Eingangsvariable 1 verknüpft und das so neu gebildete Minimum in den Schreib/Lese-Speicher zurückgeschrieben.

In Figur 6 ist eine vorteilhafte Ausgestaltung des zweiten Teils der Regelauswerteschaltung RE dargestellt, der einen optional vorgesehenen Schaltungsteil A zur Verarbeitung von Regelgruppengrößen aufweist.

Der in jedem Fall vorgesehene Schaltungsteil des zweiten Teils der Regelauswerteschaltung RE sieht eine Aggregation der aktuellen Gewichtungsfaktoren mea durch eine linguistische ODER-Verknüpfung vor, wobei die aktuellen Gewichtungsfaktoren von Regeln mit gleichem linguistischen Wert der Ausgangsvariablen getrennt aggregiert werden. Die linguistische ODER-Verknüpfung besteht in Figur 6 aus einer Einheit BSUM zur Bildung einer begrenzten Summe und einer Maximumschaltung, die beide mit dem aktuellen Gewichtungsfaktor mea und einem bisherigen aggregierten Gewichtungsfaktor gv versorgbar sind und die mit Hilfe eines Multiplexers MUX3 in Abhängigkeit eines Signals falO alternativ wählbar sind. Zur Zwischenspeicherung der bisherigen aggregierten Gewichte sind Register REG0 ... REG15 vorgesehen, die über einen Auswahldekoder DEC durch die Nummer no für die linguistischen Werte der Ausgangsvariablen ansteuerbar sind. Die Ausgänge der Register REG0 ... REG15 sind über einen Multiplexer MUX4 sowohl der Einheit zur Bildung einer begrenzten Summe als auch der Maximumschaltung zuführbar, wobei die Ansteuerung des Multiplexers MUX4 durch die Nummer no für den linguistischen Wert der Ausgangsvariablen erfolgt. An den Ausgängen der Register REG0 ... REG15 liegen die aggregierten Gewichtungsfaktoren gout0 ... gout15 an, die der Defuzzifikationsschaltung DFUZ zuführbar sind.

Werden in einer vorteilhaften Ausgestaltung die Nummern no der linguistischen Werte der Ausgangsvariablen nicht aus dem Wissensbasisspeicher ausgelesen, sondern mit Hilfe des in Figur 6 optional vorgesehenen Schaltungsteils A aus Regelgruppengrößen, die, wie vorher näher erläutert, im Wissensbasisspeicher KB abgespeichert sind, ermittelt, so ist ein weiteres Halteglied LATag, ein weiterer Multiplexer MUX2, ein Identitätsvergleicher E, ein Regelzähler CNT2 und ein Regelgruppenzähler CNT3 erforderlich. Ein jeweiliges Regelgruppenwort RGG, mit beispielsweise 16 Bit Wortbreite, wird in das Halteglied LATag eingeschrieben und mit Hilfe des Multiplexers MUX2 alternativ entweder das niedrigwertige Byte oder das hochwertige Byte auf einen ersten Eingang der Identitätsvergleicherschaltung E durchgeschaltet. Der zweite Eingang der Identitätsvergleicherschaltung E erhält das Ausgangssignal cnt des Regelzählers CNT2, dem ein Zähleraktivierungssignal cnten_2, ein Ladeaktivierungssignal loaden_2, und ein Ladesignal load_2 zuführbar sind. Sobald die Anzahl der Regeln in einer jeweiligen Gruppe gleich der Regelgruppengröße entspricht wird ein entsprechendes Signal cnt_iet_rgg erzeugt, das den Regelgruppenzähler CNT3 inkrementiert. Der Regelgruppenzähler CNT3 ist durch ein Ladesignal load_3 und ein Ladeaktivierungssignal loaden_3 ladbar. Am Ausgang des Regelgruppenzählers liegt die Nummer für die jeweilige Regelgruppe und damit auch die Nummer no für den jeweiligen linguistischen Wert der Ausgangsvariablen, deren niedrigstwertiges Bit no0 zur Steuerung des Multiplexers MUX2 herangezogen wird.

## Patentansprüche

1. Anordnung (RDE) zur Regeldekodierung und Regelauswertung in einem Fuzzy-Inference-Prozessor, bestehend aus einem Regeldekoder (RDEC), einer Regelauswerteeinheit (RE) und einer Einheit (S) zur Bildung von Auswahlsignalen (sel),
- bei der eine minimale Nummer (ne_min (l)) für einen getroffenen linguistischen Wert einer jeweiligen Eingangsvariablen (l) sowohl dem Regeldekoder als auch der Einheit zur Bildung von Auswahlsignalen zuführbar ist,
- bei der eine maximale Nummer (ne_max (l) für einen weiteren getroffenen linguistischen Wertes der jeweiligen Eingangsvariablen (1) dem Regeldekoder zuführbar ist,
- bei der Werte (me (ne_min (l)) ... me (ne_max (l))) von Zugehörigkeitsfunktionen von linguistischen Werten, deren Nummern im abgeschlossenen Intervall zwischen der minimalen und maximalen Nummer liegen, der Regelauswertungseinheit (RE) zuführbar sind,
- bei der Nummern (ne (l, k) ... ne (l, k + 3)) für in einer jeweiligen Mehrzahl von Regeln (k, ..., k + 3) vorgegebene linguistische Werte der jeweiligen Eingangsvariablen sowohl dem Regeldekoder als auch der Einheit zur Bildung der Auswahlsignale zuführbar sind, wobei jeweils Nummern von einer jeweiligen Mehrzahl von Regeln (k, ..., k + 3) zu einem jeweiligen Regelwort (RW (l,1) ... RW (l, apev)) zusammengefaßt sind und für jede Eingangsvariable ein eigener Block (SRS1 ... SRSl ... SRSnev) mit jeweiligen Regelworten (RW (l,1) ... RW (nev,apev)) vorgesehen ist,
- bei der im Regeldekoder für die jeweilige Eingangsvariable (1) und die jeweilige Mehrzahl von Regeln Treffersignale (hit (l, k) ... hit (l, k + 3)) bildbar und der Einheit (S) zur Bildung von Auswahlsignalen zuführbar sind,
- bei der im Regeldekoder für die jeweilige Eingangsvariable und die jeweilige Mehrzahl von Regeln Signale (sm (l, k) ... sm (l, k + 3)) zur Festlegung einer in einer Regel nicht vorkommenden Eingangsvariablen bildbar und der Regelauswertungseinheit zuführbar sind,
- bei der die Auswahlsignale (sel) der Regelauswertungseinheit (RE) zuführbar sind, in der Gewichtungsfaktoren (G) für eine Defuzzifikationseinheit (DFUZ) bildbar sind,
- bei der in der Regelauswerteeinheit (RE) eine Mehrzahl von Haltegliedern (LAT4 ... LAT7), eine Zuordnungseinheit (SC), eine Mehrzahl von ODER-Gattern (OR11 ... OR14), eine Mehrzahl von Minimum-Schaltungen (MIN1 ... MIN4), eine weitere Mehrzahl von Haltelgiedern (LAT8 ... LAT11) eine Mehrzahl von Treibern (T1 ... T4), ein Zähler (CNT1), ein Schreib/Lese-Speicher (RAM) und ein Multiplexer (MUX1) vorgesehen sind,
- bei der jeweils ein Wert der Werte (me (ne_min (l) ... me (ne_max (l)) von Zugehörigkeitsfunktionen von linguistischen Werten, deren Nummern im abgeschlossenen Intervall der minimalen und maximalen Nummern liegen, in einem jeweiligen Halteglied der Mehrzahl von Haltegliedern (LAT4 ... LAT7) zwischenspeicherbar und die Ausgangssignale der jeweiligen Halteglieder mit Hilfe der Zuordnungsschaltung (SC) in Abhängigkeit von Auswahlsignalen (sel) einem jeweiligen ersten Eingang des jeweiligen ODER-Gatters zugeordnet sind,
- bei der einem jeweiligen zweiten Eingang des jeweiligen ODER-Gatters das jeweilige Signal (sm (l, k)) zur Festlegung einer in der Regel nicht vorkommenden Eingangsvariablen zugeführt ist,
- bei der der jeweilige Ausgang des jeweiligen ODER-Gatters mit einem ersten Eingang einer jeweiligen Miniumumschaltung aus der Mehrzahl von Minimumschaltungen verbunden und das Ausgangssignal der jeweiligen Minimumschaltung über einen aus der Vielzahl von Treibern in den Schreib/Lese-Speicher (RAM) einschreibbar und von dort über ein jeweiliges Halteglied der weiteren Mehrzahl von Haltegliedern (LAT8 ... LAT11) auf den jeweilige zweiten Eingang der jeweiligen Minimumschaltung auslesbar ist,
- bei der der Zähler zur Adressierung des Schreib/Lese-Speichers dient,
- bei der durch den Multiplexer das Ausgangssignal eines jeweiligen Treibers aus der Mehrzahl von Treibern als aktueller Geiwichtungsfaktor (mea) auswählbar ist und
- bei der, nach Nummern (no) für lingustische Werte der Ausgangsvariablen geordnet, eine Aggregierung der aktuellen Gewichtungsfaktoren (mea) durch eine linguistische ODER-Verknüpfung durchführbar ist.

2. Anordnung nach Anspruch 1,
- bei der der Regeldekoder pro Regel in der Mehrzahl von Regeln (k, ..., k + 3) jeweils einen ersten und zweiten Komparator (COMP1, COMP2; ...; COMP7, COMP8) mit einer Vergleichsbedingung a ≥ b, ein erstes und zweites UND-Gatter (A1, A2; ...; A7, A8) und ein ODER-Gatter (OR1, ..:, OR4) aufweist,
- bei der einem jeweiligen a-Eingang des ersten Komparators die maximale Nummer (ne_max (l)) des jeweiligen weiteren getroffenen linguistischen Wertes der Eingangsvariablen (l) und einem jeweiligen b-Eingang des zweiten Komparators die jeweilige minimale Nummer (ne_min (l)) des getroffenen linguistischen Wertes der Eingangsvariablen (l) zuführbar ist,
- bei der eine jeweilige Nummer (ne (l, k)) für einen in der jeweiligen Regel (k) vorgegebenen linguistischen Wert der Eingangsvariablen (l) bitweise durch das jeweilige erste UND-Gatter (Al) UND-verknüpft ist und am Ausgang des jeweiligen ersten UND-Gatters ein jeweiliges Signal (sm (l, k)) zur Maskierung einer in einer Regel nicht vorkommenden Eingangsvariablen bildbar ist, bei der die jeweilige Nummer (ne (l, k)) für einen in der jeweiligen Regel (k) vorgegebenen linguistischen Wert der Eingangsvariablen (l) einem b-Eingang des jeweiligen ersten Komparators und einem a-Eingang des jeweiligen zweiten Komparators zuführbar ist,
- bei der die Ausgangssignale des jeweiligen ersten und zweiten Komparators durch das jeweilige zweite UND-Gatter (A2) verknüpft sind, und
- bei der das Ausgangssignal des jeweiligen zweiten UND-Gatters und das jeweilige Signal (sm (l, k)) zur Maskierung einer in der Regel nicht vorkommenden Eingangsvariablen in dem jeweiligen ODER-Gatter zu dem jeweiligen Treffersignal (hit (l, k)) verknüpfbar ist.

3. Anordnung nach einem der Ansprüche 1 oder 2,
- bei der eine Einheit (S) zur Bildung von Auswahlsignalen (sel) pro Regel aus der Mehrzahl von Regeln (k, ..., k + 3) jeweils ein Subtrahierer (SUB0, SUB3) und ein Halteglied (LAT0 ... LAT3) vorgesehen ist,
- bei der durch die Subtrahierer von den Nummern für die in der jeweiligen Mehrzahl von Regeln (k, ..., k + 3) vorgegebenen linguistischen Werte der jeweiligen Eingangsvariablen die minimale Nummer der getroffenen linguistischen Werte der jeweiligen Eingangsvariablen substrahierbar und die Differenz einem Eingang des jeweilige Haltegliedes zuführbar ist,
- bei der das jeweilige Halteglied (LAT0 ... LAT3) das jeweilige Treffersignal (hit (l, k) hit (l, k + 3)) als Taktsignal (CLK) erhält und
- bei der die Auswahlsignale (sel) den Auswahlsignalen (sel (k)) ... sel (k + 3)) der Halteglieder (LAT0 ... LAT3) entsprechen.

4. Anordnung nach einem der vorhergehenden Ansprüche,
- bei der die Regelauswertungseinrichtung (RE) eine Einrichtung (A) zur Erzeugung der Nummer (no) für linguistische Werte der Ausgangsvariablen aufweist, die durch Regelgruppengrößenworte (RGG1 ... RGG8) ansteuerbar ist, wobei ein Regelgruppengrößenwort zwei Regelgruppengrößen (rgg0, rgg1) enthält und eine jeweilige Regelgruppe aus Regeln besteht, die jeweils einen gleichen linguistischen Wert im Folgeteil aufweisen,
- bei der die Einrichtung (A) zur Erzeugung der Nummern für die linguistischen Werte der Ausgangsvariablen, ein Halteglied (LATag), einen Multiplexer (MUX2), einen Regelzähler (CNT2), einen Identitätsvergleicher (E) und einen Regelgruppenzähler (CNT3) aufweist,
- bei der das Regelgruppengrößenwort in das Halteglied einspeicherbar und abhängig vom niedrigstwertigen Bit (no0) der Nummer (no) für den jeweiligen linguistischen Wert der Ausgangsvariablen eine der beiden Regelgruppengrößen (rgg0, rgg1) mit Hilfe des Multiplexers auf einen ersten Eingang des Identitätsvergleichers durchschaltbar ist und
- bei der dem zweiten Eingang des Identitätsvergleichers ein Ausgangssignal (cnt) des Zählers (CNT2) zuführbar ist und durch das Ausgangssignal (cnt_iet_rgg) des Identitätsvergleichers eine Inkrementierung des Regelgruppenzählers durchführbar ist, wobei der Ausgang des Regelgruppenzählers die Nummer (no) für den jeweiligen linguistischen Wert der Ausgangsvariablen liefert.

## Claims

1. Arrangement (RDE) for rule decoding and evaluation in a fuzzy inference processor, comprising a rule decoder (RDEC), a rule evaluation unit (RE) and a unit (S) for forming selection signals (sel),
- in which a minimum number (ne_min (l)) for a relevant linguistic value of a respective input variable (l) can be fed both to the rule decoder and to the unit for forming selection signals,
- in which a maximum number (ne max (l)) for a further relevant linguistic value of the respective input variable (l) can be fed to the rule decoder,
- in which the values (me (ne_min (l)) ... me (ne_max (l))) of membership functions of linguistic values whose numbers lie in the closed interval between the minimum and maximum number can be fed to the rule evaluation unit (RE),
- in which numbers (ne (l, k) ... ne (l, k + 3)) for linguistic values, prescribed in a respective plurality of rules (k, ..., k + 3), of the respective input variable can be fed both to the rule decoder and to the unit for forming the selection signals, in each case numbers from a respective plurality of rules (k, ..., k + 3) being combined into a respective rule word (RW (l,1) ... RW (l, apev)) and, for each input variable, a dedicated block (SRS1 ... SRSl ... SRSnev) with respective rule words (RW (l,1) ... RW (nev,apev)) being provided,
- in which, in the rule decoder for the respective input variable (l) and the respective plurality of rules, hit signals (hit (l, k) ... hit (l, k + 3)) can be formed and can be fed to the unit (S) for forming selection signals,
- in which, in the rule decoder for the respective input variable and the respective plurality of rules, signals (sm (l, k) ... sm (l, k + 3)) for establishing an input variable which does not occur in a rule can be formed and can be fed to the rule evaluation unit and
- in which the selection signals (sel) can be fed to the rule evaluation unit (RE), in which weighting factors (G) for a defuzzification unit (DFUZ) can be formed,
- in which, in the rule evaluation unit (RE), provision is made of a plurality of hold elements (LAT4 .. LAT7), an allocation unit (SC), a plurality of OR gates (OR11 ... OR14), a plurality of minimum circuits (MIN1 ... MIN4), a further plurality of hold elements (LAT8 ... LAT11), a plurality of drivers (T1 ... T4), a counter (CNT1), a read/write memory (RAM) and a multiplexer (MUX1),
- in which in each case one value of the values (me (ne_min (l)) ... me (ne_max (l))) of membership functions of linguistic values whose numbers lie in the closed interval between the minimum and maximum numbers can be buffered in a respective hold element of the plurality of hold elements (LAT4 ... LAT7), and the output signals of the respective hold elements are allocated, with the aid of the allocation circuit (SC), to a respective first input of the respective OR gate, as a function of selection signals (sel),
- in which the respective signal (sm (l, k)) for establishing an input variable which does not occur in the rule is fed to a respective second input of the respective OR gate,
- in which the respective output from the respective OR gate is connected to a first input of a respective minimum circuit from the plurality of minimum circuits, and the output signal from the respective minimum circuit can be written via one of the multiplicity of drivers into the read/write memory (RAM) and can be read out from there, via a respective hold element of the further plurality of hold elements (LAT8 ... LAT11), to the respective second input of the respective minimum circuit,
- in which the counter serves for addressing the read/write memory,
- in which, by means of the multiplexer, the output signal from a respective driver from the plurality of drivers can be selected as the current weighting factor (mea) and
- in which, ordered in accordance with numbers (no) for linguistic values of the output variables, an aggregation of the current weighting factors (mea) can be executed by means of linguistic ORing.

2. Arrangement according to Claim 1,
- in which the rule decoder per rule in the plurality of rules (k, ..., k + 3) has in each case a first and second comparator (COMP1, COMP2; ...; COMP7, COMP8) with a comparison condition a ≥ b, a first and second AND gate (A1, A2; ...; A7, A8) and an OR gate (OR1, ..., OR4),
- in which the maximum number (ne_max (l)) of the respective further relevant linguistic value of the input variable (l) can be fed to a respective a-input of the first comparator and the respective minimum number (ne_min (l)) of the relevant linguistic value of the input variable (l) can be fed to a respective b-input of the second comparator,
- in which a respective number (ne (l, k)) for a linguistic value, prescribed in the respective rule (k), of the input variable (l) is ANDed bit by bit by the respective first AND gate (Al) and, at the output of the respective first AND gate, a respective signal (sm (l, k)) for masking an input variable which does not occur in a rule can be formed, in which the respective number (ne (l, k)) for a linguistic value, prescribed in the respective rule (k), of the input variable (l) can be fed to a b-input of the respective first comparator and to an a-input of the respective second comparator,
- in which the output signals from the respective first and second comparator are linked by the respective second AND gate (A2), and
- in which the output signal of the respective second AND gate and the respective signal (sm (l, k)) for masking an input variable which does not occur in the rule can be linked in the respective OR gate to form the respective hit signal (hit (l, k)).

3. Arrangement according to either claim 1 or 2,
- in which for one unit (S) for forming selection signals (sel) per rule from the plurality of rules (k, ..., k + 3), in each case a subtractor (SUB0, SUB3) and a hold element (LAT0 ... LAT3) is provided,
- in which, by means of the subtractors it is possible to subtract from the numbers for the linguistic values, prescribed in the respective plurality of rules (k, ..., k + 3), of the respective input variable the minimum number of the relevant linguistic values of the respective input variable, and the difference can be fed to an input of the respective hold element,
- in which the respective hold element (LAT0 ... LAT3) receives the respective hit signal (hit (l, k)*,* ..., hit (l, k + 3)) as clock signal (CLK) and
- in which the selection signals (sel) correspond to the selection signals (sel (k) ... sel (k + 3)) of the hold elements (LAT0 ... LAT3).

4. Arrangement according to one of the preceding claims,
- in which the rule evaluation device (RE) has a device (A) for producing the number (no) for linguistic values of the output variables, which device can be driven by rule group variable words (RGG1 ... RGG8), a rule group variable word containing two rule group variables (rgg0, rgg1) and a respective rule group comprising rules which in each case have an identical linguistic value in the consequence part,
- in which the device (A) for producing the numbers for the linguistic values of the output variables has a hold element (LATag), a multiplexer (MUX2), a rule counter (CNT2), an identity comparator (E) and a rule group counter (CNT3),
- in which the rule group variable word can be written to the hold element and, depending on the least significant bit (no0) of the number (no) for the respective linguistic value of the output variable, one of the two rule group variables (rgg0, rgg1) can be switched through to a first input of the identity comparator with the aid of the multiplexer and
- in which an output signal (cnt) from the counter (CNT2) can be fed to the second input of the identity comparator and, as a result of the output signal (cnt_iet_rgg) of the identity comparator, an incrementing of the rule group counter can be carried out, the output of the rule group counter supplying the number (no) for the respective linguistic value of the output variable.

## Revendications

1. Système de décodage et d'évaluation de règles (RDE) dans un processeur d'inférence floue, comportant un décodeur de règles (RDEC), une unité d'évaluation de règles (RE) et une unité (S) de génération de signaux de sélection (sel),
- dans lequel un numéro minimal (ne_min (l)) pour une valeur linguistique rencontrée d'une variable d'entrée (I) respective peut être amené à la fois au décodeur de règles et à l'unité de génération de signaux de sélection,
- dans lequel un numéro maximal (ne_max (l)) pour une autre valeur linguistique rencontrée de la variable d'entrée (l) respective peut être amené au décodeur de règles,
- dans lequel des valeurs (me (ne_min (l)) ... me (ne_max (l))) de fonctions d'appartenance de valeurs linguistiques, dont les numéros sont situés dans l'intervalle fermé entre le numéro minimal et le numéro maximal, peuvent être amenées à l'unité d'évaluation de règles (RE),
- dans lequel des numéros (ne (l, k) ... ne (l, k + 3) pour des valeurs linguistiques prédéfinies dans une pluralité respective de règles (k, ..., k + 3) des variables d'entrée respectives peuvent être amenés à la fois au décodeur de règles et à l'unité de génération de signaux de sélection, des numéros d'une pluralité respective de règles (k, ..., k + 3) étant regroupés en un mot de règle respectif (Rw (l, 1) ... RW (l, apev), et un propre bloc (SRS1 . . . SRSl . . . SRSnev) comportant des mots de règle respectifs (RW (l, 1) . . . RW (nev, apev) étant prévu pour chaque variable d'entrée,
- dans lequel des signaux de contrôle (hit (l, k) . . . hit (l, k + 3) peuvent être générés pour la variable d'entrée (l) respective et pour la pluralité respective de règles dans le décodeur de règles et amenés à l'unité (S) de génération de signaux de sélection,
- dans lequel des signaux (sm (l, k) ... sm (l, k + 3) de définition d'une variable d'entrée absente d'une règle peuvent être générés pour la variable d'entrée respective et la pluralité respective de règles dans le décodeur de règles et amenés à l'unité d'évaluation de règles,
- dans lequel les signaux de sélection (sel) peuvent être amenés à l'unité d'évaluation de règles (RE), dans laquelle peuvent être générés des facteurs de pondération (G) pour une unité de défuzzyfication (DFUZ),
- dans lequel l'unité d'évaluation de règles (RE) comporte une pluralité d'éléments d'arrêt (LAT4 ... LAT7), une unité d'affectation (SC), une pluralité de portes OU (OR11 ... OR14), une pluralité de circuits minimaux (MIN1 ... MIN4), une autre pluralité d'éléments d'arrêt (LAT8 ... LAT11), une pluralité de pilotes (T1 ... T4), un compteur (CNT1), une mémoire à écriture et lecture (RAM) et un multiplexeur (MUX1),
- dans lequel à chaque fois une valeur des valeurs (me (ne_min (l) ... me (ne_max (l)) de fonctions d'appartenance de valeurs linguistiques, dont les numéros sont situés dans l'intervalle fermé entre le numéro minimal et le numéro maximal, peut être stockée temporairement dans un élément d'arrêt respectif de la pluralité d'éléments d'arrêt (LAT4 ... LAT7), les signaux de sortie des éléments d'arrêt respectifs étant affectés, à l'aide du circuit d'affectation (SC), en fonction de signaux de sélection (sel), à une première entrée respective de la porte OU respective,
- dans lequel le signal (sm (I, k) ) respectif de définition d'une variable d'entrée absente de la règle est amené à une deuxième entrée respective de la porte OU respective,
- dans lequel la sortie respective de la porte OU respective est reliée à une première entrée d'un circuit minimal respectif parmi la pluralité de circuits minimaux et le signal de sortie du circuit minimal respectif peut être inscrit dans la mémoire à écriture et lecture (RAM) par l'intermédiaire d'un pilote parmi la pluralité de pilotes, de laquelle il peut être extrait par l'intermédiaire d'un élément d'arrêt respectif de l'autre pluralité d'éléments d'arrêt (LAT8 ... LAT11) pour être amené à la deuxième entrée respective du circuit minimal respectif,
- dans lequel le compteur sert à l'adressage de la mémoire à écriture et lecture,
- dans lequel le signal de sortie d'un pilote respectif parmi la pluralité de pilotes peut être sélectionné comme facteur de pondération actuel (mea), au moyen du multiplexeur,
- dans lequel une agrégation des facteurs de pondération actuels (mea) classés selon des numéros (no) pour des valeurs linguistiques des variables de sortie est réalisable au moyen d'un circuit OU linguistique.

2. Système selon la revendication 1,
- dans lequel le décodeur de règles comporte par règle parmi la pluralité de règles (k, ..., k + 3) respectivement un premier et un deuxième comparateur (COMP1, COMP2 ;...; COMP7, COMP8) ayant une condition de comparaison a ≥ 2 b, une première et une deuxième porte ET (A1, A2 ;...; A7, A8) et une porte OU (OR1,..., OR4),
- dans lequel le numéro maximal (ne_max (l)) de l'autre valeur linguistique respective rencontrée des variables d'entrée (l) peut être amené à une entrée a respective du premier comparateur, et le numéro minimal (ne_min (l)) de la valeur linguistique rencontrée des variables d'entrée (I) à une entrée b respective du deuxième comparateur,
- dans lequel un numéro (ne (I, k) ) respectif d'une valeur linguistique prédéfinie dans la règle (k) respective des variables d'entrée est lié bit par bit par la porte ET (A1) respective et un signal (sm (l, k)) respectif de masquage d'une variable d'entrée absente d'une règle peut être généré à la sortie de la première porte ET respective, dans lequel le numéro (ne(l, k)) respectif d'une valeur linguistique prédéfinie dans la règle (k) respective des variables d'entrée (I) peut être amené à une entrée b du premier comparateur respectif et à une entrée a du deuxième comparateur respectif,
- dans lequel les signaux de sortie du premier et deuxième comparateur respectif sont liés par la deuxième porte ET (A2) respective, et
- dans lequel le signal de sortie de la deuxième porte ET respective et le signal (sm (I, k) ) respectif de masquage d'une variable d'entrée absente de la règle peuvent être liés dans la porte OU respective en un signal de contrôle (hit (I, k) ) respectif.

3. Système selon l'une des revendications 1 ou 2,
- dans lequel sont prévus une unité (S) de génération de signaux de sélection (sel) par règle parmi la pluralité de règles (k, ..., k + 3), respectivement un soustracteur (SUB0, ..., SUB3) et un élément d'arrêt (LAT0 ... LAT3),
- dans lequel le numéro minimal des valeurs linguistiques rencontrées des variables d'entrée respectives peut être soustrait, au moyen des soustracteurs, des numéros des valeurs linguistiques prédéfinies dans la pluralité respective de règles (k, ..., k + 3), et la différence peut être amenée à une entrée de l'élément d'arrêt respectif,
- dans lequel l'élément d'arrêt (LAT0 ... LAT3) respectif reçoit le signal de contrôle (hit (l, k) hit (l, k + 3) respectif comme signal de rythme (CLK), et
- dans lequel les signaux de sortie (sel) sont identiques aux signaux de sortie (sel (k) . . . sel (k + 3) ) des éléments d'arrêt (LAT0 ... LAT3).

4. Système selon l'une des revendications précédentes,
- dans lequel le dispositif d'évaluation de règles (RE) comporte un dispositif (A) de génération de numéros (no) pour des valeurs linguistiques des variables de sortie, qui peut être sélectionné par des mots de grandeurs de groupes de règles (RGG1 ... RGG8), un mot de grandeurs de groupes de règles comportant deux grandeurs de groupes de règles (rgg0, rgg1) et un groupe de règles respectif étant composé de règles qui présentent chacune une valeur linguistique identique dans la série suivante,
- dans lequel le dispositif (A) de génération de numéros pour les valeurs linguistiques des variables de sortie comporte un élément d'arrêt (LATag), un multiplexeur (MUX2), un compteur de règles (CNT2), un comparateur logique (E) et un compteur de groupes de règles (CNT3),
- dans lequel le mot de grandeurs de groupes de règles peut être transféré dans l'élément d'arrêt et, en fonction du bit de plus faible poids (no0) pour la valeur linguistique respective des variables de sortie, l'une des deux grandeurs de groupes de règles peut être connectée à une première entrée du comparateur logique, et
- dans lequel un signal de sortie (cnt) du compteur (CNT2) peut être amené à la deuxième entrée du comparateur logique et une incrémentation du compteur de groupes de règles peut être réalisée grâce au signal de sortie (cnt_iet _rgg) du comparateur logique, la sortie du compteur de groupes de règles fournissant le numéro (no) pour la valeur linguistique respective des variables de sortie.
